# EUROPÄISCHE PATENTSCHRIFT

(11) **EP 1 749 417 B1**
(45) Veröffentlichungstag und Bekanntmachung des Hinweises auf die Patenterteilung: **26.12.2012**
(21) Anmeldenummer: 05747816.6
(22) Anmeldetag: 27.04.2005
(51) Int. Cl.: H04W 36/00

(54) **VERFAHREN ZUR VERBINDUNGSÜBERGABE**
METHOD FOR CONNECTION HANDOVER
PROCEDE DE TRANSFERT DE COMMUNICATION

(30) Priorität: 17.05.2004 DE 102004024390
(43) Veröffentlichungstag der Anmeldung: 07.02.2007
(73) Patentinhaber: SIEMENS AKTIENGESELLSCHAFT, 80333 München (DE)
(72) Erfinder: TRAYNARD, Jean-Michel, 81667 München (DE); FÄRBER, Michael, 82515 Wolfratshausen (DE)
(86) Internationale Anmeldenummer: PCT/EP2005/051901
(87) Internationale Veröffentlichungsnummer: WO 2005/115039

(56) Entgegenhaltungen:
- WO-A-2004/025983
- US-A1- 2003 218 995
- "Universal Mobile Telecommunications System (UMTS); Radio Resource Management strategies (3GPP TR 25.922 version 6.0.1 Release 6); ETSI TR 125 922" ETSI STANDARDS, EUROPEAN TELECOMMUNICATIONS STANDARDS INSTITUTE, SOPHIA-ANTIPO, FR, Nr. V601, April 2004 (2004-04), Seiten 1, 15-31, XP002338707 ISSN: 0000-0001
- ETSI: "TS 125 331 Universal Mobile Telecommunications System (UMTS); Radio Resource Control (RRC) protocol specification (3GPP TS 25.331 version 6.1.10 Release 1999) Chapter 8.3.1.2" ETSI TS 125 331 V6.1.10, März 2004 (2004-03), Seiten 1, 953-961, XP002338708

## Beschreibung

Die Erfindung betrifft ein Verfahren zur Übergabe einer Verbindung, die zwischen einem Funkkommunikationsendgerät und einem ersten Funkkommunikationssystem eingerichtet ist, an ein zweites Funkkommunikationssystem gemäß dem Oberbegriff des Patentanspruchs 1.

Dabei ist zur Nachrichtenübertragung dem ersten Funkkommunikationssystem ein erster Funkübertragungsstandard zugeordnet, während dem zweiten Funkkommunikationssystem ein zweiter Funkübertragungsstandard zugeordnet ist.

Es sind so genannte Multimode-Funkkommunikationsendgeräte bekannt, die zur Nachrichtenübertragung mehrere Funkkommunikationsstandards verwenden können. Die Auswahl eines geeigneten Funkkommunikationsstandards erfolgt beispielsweise in Abhängigkeit von einem zu übertragenden Dienst. So werden beispielsweise bei einem GSM/UMTS-Funkkommunikationsendgerät Sprachdienste mit Hilfe des GSM-Funkkommunikationsstandards übertragen, während eine angeforderte Videoübertragung beispielsweise mit Hilfe des UMTS-Funkkommunikationsstandards übertragen wird. Beim UMTS-Funkkommunikationsstandard wird zwischen dem so genannten UTRA-FDD- und dem UTRA-TDD-Funk-übertragungsverfahren unterschieden.

Ein derartiges Funkkommunikationsendgerät überwacht mittels Messungen sowohl benachbarte Funkzellen eines ersten Funkkommunikationssystems, in dem es gegenwärtig aktiv ist, als auch benachbarte Funkzellen eines weiteren Funkkommunikationssystems, in dem gegebenenfalls eine Verbindung aufzubauen wäre. Die Messungen werden dann an eine Netzseite des ersten Funkkommunikationssystems übertragen. Diese Überwachung erfolgt auch bei einer als "Handover" bezeichneten Übergabe einer Verbindung, die zwischen dem Funkkommunikationsendgerät und dem ersten Funkkommunikationssystem eingerichtet ist, an das weitere, hier zweite, Funkkommunikationssystem.

Nachfolgend wird beispielhaft für andere -Funkübertagungsstandards ein GSM/UTRA-FDD-Multimode-Funkkommunikationsendgerät betrachtet.

Die Funkübertragungsstandards GSM und UTRA-FDD unterscheiden sich aufgrund der jeweils angebotenen Leistungsmerkmale stark voneinander. Ein Messfenster bzw. eine zur Verfügung stehende Messzeit, die im GSM-Funkübertragungsstandard zur Funkzellenüberwachung zur Verfügung steht, ist zwar zur Überwachung von benachbarten GSM-Funkzellen ausreichend, ist jedoch nachteilig zur Überwachung zumindest dreier benachbarter UMTS-Funkzellen nur bedingt geeignet.

In ETSI TR 125922 V6.0.1 wird die Übergabe einer Verbindung zwischen den Funkübertragungsstandards GSM und UTRA-TDD behandelt.

Ein weiterer Nachteil entsteht dadurch, dass zur Minimierung von Implementierungskosten ein GSM/UTRA-FDD-Funkkommunikationsendgerät lediglich eine gemeinsame Einrichtung zur Basisbandsignalverarbeitung für beide Standards GSM und UTRA-FDD aufweist. Diese Einrichtung ist zur aufeinanderfolgenden Signalverarbeitung der beiden Funkübertragungsstandards ausgebildet, eine gleichzeitig erfolgende Basisbandsignalverarbeitung von Signalen beider Standards ist nicht möglich. Somit ist während einer Betrachtungszeit nur eine Verabreitung von Signalen eines ausgewählten Funkübertragungsstandards möglich.

Innerhalb einer Betrachtungszeit können also nur Basisbandsignale bzw. Messwerte eines ersten Funkkommunikationsstandards bearbeitet werden, auch wenn von einer Zeitlage her eine Messung der benachbarten Funkzellen des zweiten Funkkommunikationssystems möglich gewesen wäre. Es ist nicht möglich, gültige Messwerte, die auf die Funkzellen des zweiten Funkkommunikationssystems bezogen sind, an die Netzseite zu übertragen.

Die Überwachung der UMTS-Funkzellen erfolgt beispielweise durch Messungen am so genannten "Common Pilot Channel" CPICH dreier UMTS-Funkzellen, während die Überwachung der GSM-Funkzellen durch Messungen am so genannten "Broadcast Control Channel" BCCH erfolgt. Als Messwerte werden beispielsweise zugehörige Signalpegel RXLEV ermittelt.

Ein im GSM-Funkkommunikationssystem betriebenes GSM/UTRA-FDD-Funkkommunikationsendgerät meldet in jeder Periode eines so genannten Slow Associated Control Channel SACCH die gewonnenen Signalpegel in einem Messwertreport an ein ihr zugeordnetes Basisstationssystem (BSS) zurück.

Das beispielhaft betrachtete GSM/UTRA-FDD-Funkkommunikationsendgerät ist aufgrund der oben beschriebenen Gründe nicht in der Lage, für eine einzuleitende Übergabe einer Verbindung aus dem GSM- in den UTRA-FDD-Funkübertragungsstandard benötigte gemessene Signalpegel kontinuierlich zu bestimmen und zu übertragen. Aus diesem Grund werden immer dann, wenn eine Bildung gültiger gemessener Signalpegel nicht möglich ist, vorgegebene Signalpegel im Messwertreport an die Netzseite bzw. wie im vorliegenden Beispiel an das Basisstationssystem BSS übertragen bzw. gemeldet. Diese vorgegebenen Signalpegel weisen innerhalb eines Wertebereichs eines Messwertreports einen minimalen Wert auf.

Seitens des Basisstationssystems BSS wird eine Entscheidung, ob ein Handover durchgeführt werden soll oder nicht, anhand eines Durchschnitts-Wertes getroffen, in dem sowohl die gültigen Signalpegel-Messwerte als auch die vorgegebenen Signalpegel der jeweiligen Messwertreporte gleichberechtigt berücksichtigt werden. Die auf den Durchschnittswert basierende Entscheidung ist dadurch relativ ungenau.

Es ist Aufgabe der vorliegenden Erfindung, eine Entscheidung zur Übergabe einer Verbindung, die zwischen einem Multimode-Funkkommunikationsendgerät und einem ersten Funkkommunikationssystem eingerichtet ist, an ein zweites Funkkommunikationssystem in der Genauigkeit zu verbessern.

Diese Aufgabe wird durch die Merkmale des Patentanspruchs 1 gelöst. Vorteilhafte Weiterbildungen sind in den Unteransprüchen angegeben.

Erfindungsgemäß wird seitens des Funkkommunikationsendgeräts ein Symbol verwendet, um diejenigen Messwertreporte, die gültig gemessene Signalpegel beinhalten, von den Messwertreporten unterscheiden zu können, die vorgegebene Signalpegel beinhalten. Zusammen mit dem Symbol werden dann die jeweiligen Messwertreporte an die netzseitig angeordnete Kontrolleinrichtung übertragen, die darüber entscheidet, ob eine Verbindungsübergabe durchzuführen ist oder nicht.

So wird beispielsweise mit dem Symbol entweder ein Messwertreport mit gültig gemessenen Signalpegeln gekennzeichnet oder es wird ein Messwertreport mit den vorgegebenen Signalpegeln gekennzeichnet. Alternativ oder zusätzlich zu dieser Kennzeichnung ist auch eine entsprechende Markierung der einzelnen Signalpegel mit dem entsprechenden Symbol möglich.

Durch das Symbol ist es möglich, seitens der Kontrolleinrichtung die gültig gemessenen Signalpegel von den vorgegebenen Signalpegeln zu unterscheiden und damit die Entscheidung für einen einzuleitenden Handover lediglich basierend auf den tatsächlich gemessenen Signalpegeln zu treffen.

Die Entscheidung zur Verbindungsübergabe wird entsprechend genauer.

Durch die vorliegende Erfindung wird in vielen Fällen die Verbindungsübergabe bzw. der Handover einzelner Verbindungen erst ermöglicht, da der Durchschnittswert erst dann eine dafür erforderliche Entscheidungsschwelle erreicht, wenn nur die gültigen Signalpegel berücksichtigt werden.

Für den Fall, dass entsprechend dem Stand der Technik alle Signalpegel, egal ob gültig gemessen oder vorgegeben, bei der Bildung des Durchschnittswerts berücksichtigt werden, wird mit hoher Wahrscheinlichkeit diese Entscheidungsschwelle nicht erreicht, wodurch ein Intersystem-Handover zwischen den Funkkommunikationsstandards im praktischen Anwendungsfall nicht stattfinden wird.

Das Symbol wird in einer vorteilhaften Weiterbildung durch eine Interpretation eines Wertes aus einem Messwertbereich erzeugt. Dabei sendet das Funkkommunikationsendgerät bei einer nicht durchgeführten Messung einen minimalen Signalpegel des Messwertbereichs als vorgegebenen Signalpegel, während für den Fall eines tatsächlich gemessenen minimalen Signalpegels nicht dieser minimale Signalpegel sondern ein nächsthöherer Signalpegel des Messwertbereichs übertragen wird. Dadurch wird zwar eine Messgenauigkeit im niedrigen Signalpegelbereich geringfügig verschlechtert, jedoch wird vorteilhaft die Übertragung eines zusätzlichen Symbols zur Kennzeichnung eingespart.

Seitens des Kontrolleinrichtung wird ein Algorithmus verwendet, mit dessen Hilfe am Basisstationssystem BSS die Entscheidung zur Verbindungsübergabe getroffen wird. Dieser wird nun für die vorstehend genannte vorteilhafte Weiterbildung so gestaltet, dass Messwertereporte mit den minimlasten Signalpegeln bei der Bildung des Durchschnittswerts nicht berücksichtigt werden. Diese vorteilhafte Implementierung der Erfindung vermeidet ein zusätzlich benötigtes Symbol, das einem Übertragungsprotokoll ansonsten hinzugefügt werden müßte. Lediglich ein minimaler Wert des Messwertbereichs erhält eine neue Interpretation als Symbol und ist zur Kennzeichnung der gemessenen Signalpegel bzw. der vorgegebenen Signalpegel verwendbar.

In einer vorteilhaften Weiterbildung wird ein neuer Schwellwert eingeführt, der eine Mindestanzahl von gültigen Signalpegel-Messwerten innerhalb eines bestimmten Zeitraumes definiert. Diese Mindestanzahl wird vorteilhafterweise von einem Netzbetreiber als so genannter Operation-And-Maintenance-Parameter gewählt. Wird dieser Schwellwert überschritten und liegt der ermittelte Durchschnittswert oberhalb einer Handover-Schwelle, so wird die Verbindungsübergabe eingeleitet. Dadurch wird eine verbesserte Genauigkeit bei der Verbindungsübergabe erzielt.

Unterschreitet die Anzahl der gültigen Messungen bzw. Messwerte den vorgegebenen Schwellwert, so werden diese vom Algorithmus als nichtrelevant verworfen und ein Handover wird nicht eingeleitet.

Weiterhin ist es möglich, bei einem Unterschreiten des Schwellwerts das zur Verfügung stehende Messfenster zu vergrößern, um eine geeignete Anzahl gemessener Signalpegel bilden und übertragen zu können.

Das erfindungsgemäße Verfahren ist alle denkbaren Kombinationen verschiedener Funkübertragungsstandards einsetzbar. Insbesondere für eine Kombination aus UMTS-Standard mit dem CDMA2000-Standard und/oder dem IEEE 802.11-Standard und/oder dem IEEE 802.16e Standard.

Für diesen Fall wird in einer bevorzugten Weiterbildung als Kontrolleinrichtung ein so genanntes Access-Point-Netzelement verwendet, das eine IEEE 802-Luftschnittstelle unterstützt. Ein Access-Point-Netzelement stellt dabei den Übergang eines Ethernet-LAN-Systems mittels einer Luftschnittstelle an ein Terminal bzw. Funkkommunikationsendgerät dar.

## Patentansprüche

1. Verfahren zur Übergabe einer Verbindung, die zwischen einem Multimode-Funkkommunikationsendgerät und einem ersten Funkkommunikationssystem eingerichtet ist, an ein zweites Funkkommunikationssystem,
- bei dem zur Nachrichtenübertragung das erste Funkkommunikationssystem einen ersten Funkkommunikationsstandard und das zweite Funkkommunikationssystem einen zweiten Funkkommunikationsstandard verwendet,
- bei dem das Funkkommunikationsendgerät neben benachbarten Funkzellen des ersten Funkkommunikationssystems zusätzlich benachbarte Funkzellen des zweiten Funkkommunikationssystems durch Messungen überwacht,
- bei dem das Funkkommunikationsendgerät gültig gemessene Signalpegel der überwachten Funkzellen des ersten und des zweiten Funkkommunikationssystems an eine netzseitige Kontrolleinrichtung übermittelt,
- bei dem das Funkkommunikationsendgerät für den Fall einer zeitweise nicht durchgeführten Bildung von gemessenen Signalpegeln bei der Funkzellenüberwachung des zweiten Funkkommunikationssystems vorbestimmte Signalpegel an die Kontrolleinrichtung überträgt,
**dadurch gekennzeichnet,**
- **dass** durch ein seitens des Funkkommunikationsendgeräts verwendetes Symbol eine netzseitige Unterscheidung der gültig gemessenen Signalpegel von den vorbestimmten Signalpegeln ermöglicht wird, und
- **dass** bei der durch die Kontrolleinrichtung gesteuerten Verbindungsübergabe lediglich die gültig gemessenen Signalpegel berücksichtigt werden.

2. Verfahren nach Anspruch 1,
wobei
- das Funkkommunikationsendgerät einen minimalen Signalpegel eines vorgegebenen Messwertbereichs als vorbestimmten Signalpegel überträgt, und
- die Kontrolleinrichtung diesen minimalen Signalpegel als mit einem Symbol markierten Signalpegel zur Unterscheidung der gültig gemessenen Signalpegel von den vorbestimmten Signalpegeln detektiert, und für die Entscheidung zur Verbindungsübergabe lediglich die gültig gemessenen Signalpegel berücksichtigt.

3. Verfahren nach Anspruch 2 wobei
- das Funkkommunikationsendgerät für den Fall eines tatsächlich gemessenen minimalen Signalpegels anstelle des minimalen Signalpegels einen nächsthöheren Signalpegel des Messwertbereichs an die Kontrolleinrichtung überträgt.

4. Verfahren nach Anspruch 1, 2 oder 3 wobei für eine Entscheidung zur Verbindungsübergabe ein Schwellwert verwendet wird, der eine Mindestanzahl gültig gemessener Signalpegel innerhalb eines vorbestimmten Zeitraums festlegt, und die Verbindungsübergabe bei einer Überschreitung des Schwellwerts und einem oberhalb einer Verbindungsübergabe-Schwelle liegenden ermittelten Durschnittswert erfolgt.

5. Verfahren nach Anspruch 4 wobei der Schwellwert seitens eines Netzbetreibers individuell eingestellt wird.

6. Verfahren nach Anspruch 4 oder 5 wobei ein zur Bestimmung der gültig gemessenen Signalpegel verwendetes Messfenster bei einem Unterschreiten des Schwellwerts vergrößert wird.

7. Verfahren nach einem der vorhergehenden Ansprüche wobei zur Nachrichtenübertragung im ersten Funkkommunikationssystem ein UMTS-Standard und im zweiten Funkkommunikationssystem ein CDMA 2000-Standard oder ein IEEE 802.11-Standard oder ein IEEE 802.16e-Standard zur Funkkommunikation verwendet wird.

8. Verfahren nach Anspruch 7 wobei als Kontrolleinrichtung ein Access-Point-Netzelement verwendet wird, das eine IEEE 802-Luftschnittstelle unterstützt.

9. Verfahren nach einem der Ansprüche 1 bis 6 wobei zur Nachrichtenübertragung im ersten Funkkommunikationssystem ein GSM-Funkkommunikationssystem mit GSM-Funkkommunikationsstandard verwendet wird.

10. Verfahren nach einem der Ansprüche 1 bis 6 wobei zur Nachrichtenübertragung im zweiten Funkkommunikationssystem ein UMTS-Funkkommunikationssystem mit UTRA-FDD- oder ein UTRA-TDD-Funkkommunikationsstandard verwendet wird.

11. Verfahren nach Anspruch 9 oder 10 wobei als Kontrolleinrichtung ein GSM- oder ein UTRA-Basisstationsystem verwendet wird.

12. Verfahren nach einem der vorhergehenden Ansprüche wobei dass die gemessenen und die vorgegebenen Signalpegel jeweils getrennt als Messwertreport an die Netzseite übertragen werden, wobei lediglich die jeweiligen Messwertreporte zur Unterscheidung mit dem Symbol markiert werden.

13. Funkkommunikationsendgerät, **gekennzeichnet durch** Mittel zur Durchführung des Verfahrens nach einem der Ansprüche 1 bis 12.

14. Basisstationssystem oder Acess-Point-Netzelement, **gekennzeichnet durch** Mittel.zur Durchführung des Verfahrens nach einem der Ansprüche 1 bis 12.

## Claims

1. Method for the handover of a connection which has been set up between a multimode radio communication terminal and a first radiocommunication system, to a second radio communication system,
- in which the first radio communication system uses a first radio communication standard and the second radio communication system uses a second radio communication standard for the transmission of messages,
- in which the radio communication terminal also monitors adjacent radio cells of the second radio communication system in addition to adjacent radio cells of the first radio communication system by means of measurements,
- in which the radio communication terminal conveys validly measured signal levels for the monitored radio cells of the first and the second radio communication system to a network-side control device,
- in which the radio communication terminal transmits predetermined signal levels to the control device in the event that measured signal levels are temporarily not formed during monitoring of the radio cells of the second radio communication system,
**characterised in that**
- a network-side differentiation of the validly measured signal levels from the predetermined signal levels is made possible by means of a symbol used on the part of the radio communication terminal, and
- only the validly measured signal levels are taken into consideration with regard to the connection handover controlled by the control device.

2. Method according to claim 1, wherein
- the radio communication terminal transmits a minimum signal level of a predefined range of measured values as a predetermined signal level, and
- the control device detects this minimum signal level as a signal level marked with a symbol for differentiating the validly measured signal levels from the predetermined signal levels, and for the decision relating to connection handover takes only the valid measured signal levels into consideration.

3. Method according to claim 2, wherein
the radio communication terminal transmits a next-highest signal level of the range of measured values to the control device instead of the minimum signal level in the case of an actually measured minimum signal level.

4. Method according to claim 1, 2 or 3, wherein
a threshold value which specifies a minimum number of validly measured signal levels within a predetermined period of time is used for a decision relating to the connection handover, and the connection handover takes place when the threshold value is exceeded and an average value lying above a connection handover threshold is determined.

5. Method according to claim 4, wherein
the threshold value is set individually on the part of a network operator.

6. Method according to claim 4 or 5, wherein
a measuring window used for determining the validly measured signal levels is increased if the threshold value is not reached.

7. Method according to one of the preceding claims, wherein a UMTS standard is used for message transmission in the first radio communication system and a CDMA 2000 standard or an IEEE 802.11 standard or an IEEE 816e standard is used for radio communication in the second radio communication system.

8. Method according to claim 7, wherein
an access point network element which supports an IEEE 802 air interface is used as the control device.

9. Method according to one of claims 1 to 6, wherein
a GSM radio communication system with GSM radio communication standard is used for message transmission in the first radio communication system.

10. Method according to one of claims 1 to 6, wherein
a UMTS radio communication system with UTRA-FDD or a UTRA-TDD radio communication standard is used for message transmission in the second radio communication system.

11. Method according to claim 9 or 10, wherein
a GSM or UTRA base station system is used as the control device.

12. Method according to one of the preceding claims, wherein the measured and the predetermined signal levels are each transmitted separately as a measured value report to the network side, wherein just the respective measured value reports are marked with the symbol for differentiation purposes.

13. Radio communication terminal, **characterised by** means for executing the method according to one of claims 1 to 12.

14. Base station system or access point network element, **characterised by** means for executing the method according to one of claims 1 to 12.

## Revendications

1. Procédé pour transférer une liaison établie entre un terminal de radiocommunication multimode et un premier système de radiocommunication vers un deuxième système de radiocommunication, dans lequel :
- pour la transmission de messages, le premier système de radiocommunication utilise une première norme de radiocommunication et le deuxième système de radiocommunication utilise une deuxième norme de radiocommunication ;
- le terminal de radiocommunication surveille par des mesures non seulement des cellules radio voisines du premier système de radiocommunication, mais aussi, additionnellement, des cellules radio voisines du deuxième système de radiocommunication ;
- le terminal de radiocommunication transmet à un dispositif de contrôle côté réseau des niveaux de signaux valablement mesurés des cellules radio surveillées des premier et deuxième systèmes de radiocommunication ;
- le terminal de radiocommunication transmet, lors de la surveillance de cellules radio du deuxième système de radiocommunication, des niveaux de signaux prédéterminés au dispositif de contrôle dans le cas d'une formation temporairement non effectuée de niveaux de signaux mesurés,
**caractérisé en ce que** :
- un symbole utilisé du côté du terminal de radiocommunication permet de distinguer, côté réseau, le niveau de signal valablement mesuré des niveaux de signaux prédéterminés et
- seuls les niveaux de signaux valablement mesurés sont pris en compte pour le transfert de la liaison commandé par le dispositif de contrôle.

2. Procédé selon la revendication 1, dans lequel :
- le terminal de radiocommunication transmet un niveau de signal minimal d'une plage donnée de valeurs mesurées en tant que niveau de signal prédéterminé et
- le dispositif de contrôle détecte ce niveau de signal minimal en tant que niveau de signal marqué par un symbole pour distinguer les niveaux de signaux valablement mesurés des niveaux de signaux prédéterminés et prend uniquement en compte, pour décider du transfert de liaison, les niveaux de signaux valablement mesurés.

3. Procédé selon la revendication 2, dans lequel le terminal de radiocommunication, dans le cas d'un niveau de signal minimal effectivement mesuré, transmet au dispositif de contrôle, au lieu du niveau de signal minimal, un niveau de signal directement supérieur de la plage des valeurs mesurées.

4. Procédé selon la revendication 1, 2 ou 3, dans lequel est utilisée, pour une décision de transfert de liaison, une valeur seuil qui fixe un nombre minimal de niveaux de signaux valablement mesurés sur une période prédéterminée et le transfert de liaison a lieu s'il y a dépassement de la valeur seuil et en présence d'une valeur moyenne déterminée qui se situe au-dessus d'un seuil de transfert de liaison.

5. Procédé selon la revendication 4, dans lequel la valeur seuil est réglée individuellement du côté de l'opérateur de réseau.

6. Procédé selon la revendication 4 ou 5, dans lequel une fenêtre de mesure utilisée pour déterminer les niveaux de signaux valablement mesurés est agrandie en cas de dépassement de la valeur seuil par le bas.

7. Procédé selon l'une des revendications précédentes, dans lequel on utilise, aux fins de la transmission de messages, une norme UMTS dans le premier système de radiocommunication et, dans le deuxième système de radiocommunication, une norme CDMA 2000 ou une norme IEEE 802.11 ou une norme IEEE 802.16e pour la radiocommunication.

8. Procédé selon la revendication 7, dans lequel est utilisé, en tant que dispositif de contrôle, un élément de réseau de point d'accès qui supporte une interface aérienne IEEE 802.

9. Procédé selon l'une des revendications 1 à 6, dans lequel est utilisé, aux fins de la transmission de messages dans le premier système de radiocommunication, un système de radiocommunication GSM avec nome de radiocommunication GSM.

10. Procédé selon l'une des revendications 1 à 6, dans lequel est utilisé, aux fins de la transmission de messages dans le deuxième système de radiocommunication, un système de radiocommunication UMTS avec nome de radiocommunication UTRA FDD ou UTRA TDD.

11. Procédé selon la revendication 9 ou 10, dans lequel est utilisé, en tant que dispositif de contrôle, un système de stations de base GSM ou UTRA.

12. Procédé selon l'une des revendications précédentes, dans lequel les niveaux de signaux mesurés et les niveaux de signaux prédéterminés sont transmis respectivement séparément au côté réseau en tant que rapport de valeurs mesurées, seuls les rapports de valeurs mesurés respectifs étant marqués par le symbole aux fins de la distinction.

13. Terminal de radiocommunication, **caractérisé par** des moyens permettant d'exécuter le procédé selon l'une des revendications 1 à 12.

14. Système de stations de base ou élément de réseau de point d'accès, **caractérisé par** des moyens permettent d'exécuter le procédé selon l'une des revendications 1 à 12.
